(19) Europäisches Patentamt / European Patent Office / Office européen des brevets

(11) **EP 3 593 119 B1**

(12) **FASCICULE DE BREVET EUROPEEN**

(45) Date de publication et mention
de la délivrance du brevet:
**28.04.2021 Bulletin 2021/17**

(21) Numéro de dépôt: **18713317.8**

(22) Date de dépôt: **07.03.2018**

(51) Int Cl.:
***G01N 21/3504*** *(2014.01)*    ***G01J 3/427*** *(2006.01)*
***G01J 3/02*** *(2006.01)*

(86) Numéro de dépôt international:
**PCT/FR2018/050524**

(87) Numéro de publication internationale:
**WO 2018/162848 (13.09.2018 Gazette 2018/37)**

(54) **CAPTEUR OPTIQUE DE GAZ**

OPTISCHER GASSENSOR

OPTICAL GAS SENSOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.03.2017 FR 1751976**

(43) Date de publication de la demande:
**15.01.2020 Bulletin 2020/03**

(73) Titulaire: **Elichens
38000 Grenoble (FR)**

(72) Inventeur: DUPREZ, Hélène
**38170 Seyssinet-Pariset (FR)**

(74) Mandataire: **Le Goaller, Christophe
Innovation Competence Group
310 avenue Berthelot
69372 Lyon Cedex 08 (FR)**

(56) Documents cités:
**EP-A1- 2 133 684    WO-A1-2006/135212
WO-A2-2012/126471    US-B1- 6 469 303**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

## DOMAINE TECHNIQUE

Le domaine technique de l'invention est un capteur optique de gaz, et plus particulièrement un capteur infrarouge non dispersif.

## ART ANTERIEUR

Le recours à des méthodes optiques pour l'analyse d'un gaz est assez fréquent. Des dispositifs permettent de déterminer la composition d'un gaz en se basant sur le fait que les espèces composant un gaz présentent des propriétés spectrales d'absorption différentes les unes des autres. Ainsi, connaissant une bande spectrale d'absorption d'une espèce gazeuse, sa concentration peut être déterminée par une estimation de l'absorption de la lumière traversant le gaz, en utilisant la loi de Beer Lambert. Ce principe permet une estimation de la concentration d'une espèce gazeuse présente dans le milieu.

La source de lumière est usuellement une source émettant dans l'infrarouge, la méthode utilisée étant usuellement désignée par le terme anglosaxon "NDIR detection", l'acronyme NDIR signifiant Non Dispersive Infra-Red. Un tel principe a été fréquemment mis en œuvre, et est par exemple décrit dans de nombreux documents, par exemple dans US5026992, ou dans WO2007064370 ou encore dans US6469303.

Selon les procédés les plus courants, le gaz analysé s'étend entre une source de lumière et un photodétecteur, dit photodétecteur de mesure, ce dernier étant destiné à mesurer une onde lumineuse transmise par le gaz à analyser, et partiellement absorbée par ce dernier. Les procédés comprennent généralement une mesure d'une onde lumineuse, dite onde lumineuse de référence, émise par la source, et non absorbée par le gaz analysé. L'onde lumineuse de référence peut être mesurée par un photodétecteur de référence. Le document EP2133684 décrit par exemple une configuration selon laquelle un photodétecteur de mesure et un photodétecteur de référence

sont disposés symétriquement par rapport à une source de lumière.

La comparaison entre l'onde lumineuse en présence de gaz et l'onde lumineuse sans gaz permet de caractériser le gaz. Il s'agit par exemple de déterminer une quantité d'une espèce gazeuse dans le gaz, selon la technologie désignée par le terme "NDIR par absorption". Il peut également s'agir d'estimer une quantité de particules dans le gaz, en détectant une lumière diffusée par ce dernier selon une plage angulaire de diffusion prédéterminée.

L'onde lumineuse de référence est mesurée par un photodétecteur de référence. Il peut s'agir d'un photodétecteur de référence différent du photodétecteur de mesure, et agencé de façon à être disposé face à la source de lumière le photodétecteur de référence étant associé à un filtre optique de référence. Le filtre optique de référence définit une bande spectrale de référence, dans laquelle le gaz à analyser ne présente pas d'absorption significative.

Les documents EP2711687 et EP2891876 décrivent des capteurs de gaz comportant des enceintes, dans lesquelles un ou plusieurs miroirs sont agencés. Les miroirs permettent de maximiser le trajet de la lumière dans l'enceinte, et de focaliser les rayons lumineux ayant traversé le gaz sur le ou les photodétecteurs. Cela permet d'augmenter la sensibilité de détection tout en utilisant des dispositifs compacts. Le recours à des miroirs paraboliques est décrit dans WO2006/135212.

Le document WO2012/126471 décrit un capteur de gaz composé de différents capteurs élémentaires juxtaposés les uns aux autres. Selon ce dispositif, le gaz analysé circule dans les différents capteurs élémentaires.

L'objectif de l'invention est de proposer un capteur de gaz aux performances optimisées, privilégiant notamment la compacité et la sensibilité.

## EXPOSE DE L'INVENTION

Un premier objet de l'invention est un capteur de gaz comportant une enceinte, apte à recevoir le gaz, le capteur comportant également :

une source de lumière, apte à émettre une onde lumineuse se propageant dans l'enceinte selon un cône d'émission ;
un photodétecteur de mesure et un photodétecteur de référence, étant chacun apte à détecter une onde lumineuse émise par la source de lumière et ayant traversé l'enceinte;

le capteur étant tel que l'enceinte s'étend entre deux parois transversales, disposées l'une face à l'autre, les parois transversales étant reliées l'une à l'autre par une paroi périphérique, notamment cylindrique, s'étendant, entre les parois transversales, autour d'un axe longitudinal, la paroi périphérique comportant :

une première portion réfléchissante, apte à recevoir une première partie du cône d'émission pour la réfléchir vers le photodétecteur de mesure, formant ainsi un cône dit
de mesure, convergeant vers le photodétecteur de mesure, la première portion réfléchissante (31) suivant, dans un plan transversal (XY), perpendiculaire à l'axe longitudinal (Z), une première ellipse, le sommet (S1) du cône d'émission ($\Omega$1) étant disposé en un premier foyer de la première ellipse ;
une deuxième portion réfléchissante, apte à recevoir une deuxième partie du cône d'émission pour la réfléchir vers le photodétecteur de référence, formant ainsi un cône dit de référence, convergeant vers le photodétecteur de référence.

Selon un mode de réalisation, l'enceinte comporte au moins une ouverture, ménagée dans une desdites parois transversales, et destinée à l'admission ou à l'évacuation du gaz, l'ouverture étant ménagée, dans ladite paroi transversale, à l'extérieur d'une projection, selon l'axe longitudinal, et sur la paroi transversale, du cône d'émission et du cône de mesure. Les parois transversales sont de préférences des parois réfléchissantes.

De préférence, chaque ouverture permettant l'évacuation ou l'admission de gaz est également localisée à l'extérieur d'une projection, selon l'axe longitudinal, du cône de référence.

L'enceinte peut comporter deux ouvertures, chaque ouverture étant ménagée dans une desdites parois transversales et étant destinée à l'admission ou à l'évacuation du gaz, chaque ouverture étant localisée, sur ladite paroi transversale, à l'extérieur de projections, selon l'axe longitudinal, du cône d'émission ainsi que du cône de mesure, et de préférence du cône de référence.

Les parois transversales s'étendent transversalement à l'axe longitudinal, de préférence selon un plan transversal, perpendiculaire à l'axe longitudinal. Elles peuvent être parallèles au plan transversal ou sensiblement parallèle à ce dernier. Le terme sensiblement signifie qu'une tolérance angulaire est admise, par exemple +/- 20° ou +/- 30°.

La première portion réfléchissante et la deuxième portion réfléchissante peuvent en particulier être courbes. Elles décrivent alors, dans le plan transversal, une courbe, la courbe pouvant être une partie d'une ellipse ou d'une parabole. De préférence, le sommet du cône de mesure est disposé en un deuxième foyer de ladite première ellipse, différent du premier foyer. Selon cet arrangement, la première portion réfléchissante conjugue la source de lumière avec le photodétecteur de mesure. La deuxième portion réfléchissante peut également suivre, dans le plan transversal, une deuxième ellipse, le capteur étant tel que le sommet du cône d'émission est disposé en un premier foyer de la deuxième ellipse, et que le sommet du cône de référence est disposé en un deuxième foyer de la deuxième ellipse, différent du premier foyer de ladite ellipse.

La première ellipse peut comporter un grand axe s'étendant selon une direction, le cône d'émission s'étendant autour d'un axe central d'émission, l'axe central d'émission étant incliné par rapport à une direction orthogonale à la direction du grand axe, l'angle d'inclinaison étant compris entre 5° et 20°.

Le photodétecteur de mesure définit un axe optique, l'axe optique étant de préférence incliné par rapport à une direction orthogonale à la direction du grand axe, l'angle d'inclinaison étant compris entre 5° et 20°.

La distance, selon l'axe longitudinal, entre les deux parois transversales définit une hauteur de l'enceinte, par exemple comprise entre 100 μm et 1 cm, et de préférence comprise entre 500 μm et 1 cm.

Un deuxième objet de l'invention est un dispositif de détection de gaz comportant plusieurs capteurs selon le premier objet de l'invention, le dispositif étant tel qu'un premier capteur et un deuxième capteur sont superposés l'un sur l'autre, l'enceinte d'un premier capteur étant disposée sur l'enceinte d'un deuxième capteur, de telle sorte qu'une ouverture, ménagée dans une paroi transversale du premier capteur soit reliée à une ouverture ménagée dans une paroi transversale du deuxième capteur, de façon à permettre une circulation du gaz entre les deux capteurs, à travers lesdites ouvertures. Une paroi transversale du premier capteur, comportant une ouverture est disposée face à une paroi transversale du deuxième capteur, comportant une ouverture, de façon à permettre la circulation de gaz à travers les ouvertures ménagées dans lesdites parois transversales.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

## FIGURES

La figure 1 représente un schéma des principaux composants d'un exemple de capteur de gaz.

Les figures 2A et 2B représentent une coupe décrivant la géométrie de l'enceinte du capteur de gaz représenté sur la figure 1, ainsi que la disposition des principaux composants du capteur.

La figure 2C représente un exemple d'ouverture pratiquée dans une paroi transversale de l'enceinte du capteur. La figure 2D représente un autre exemple d'ouverture pratiquée dans une paroi transversale de l'enceinte du capteur.

La figure 3 représente un dispositif obtenu par l'assemblage de deux capteurs superposés l'un à l'autre.

La figure 4A illustre deux angles d'inclinaison ayant une influence sur la quantité de lumière détectée par le photodétecteur de mesure.

La figure 4B montre des essais comparatifs, représentant la quantité de lumière détectée par un photodétecteur en fonction d'une quantité de dioxyde de carbone mesurée par le capteur, pour différents angle d'inclinaison de l'axe d'émission de la source de lumière par rapport à une direction normale au grand axe d'une ellipse, dite première ellipse et pour différents angles d'inclinaison de l'axe du photodétecteur de mesure par rapport audit grand axe.

La figure 4C montre des essais comparatifs, représentant la quantité de lumière détectée par un photodétecteur d'une quantité de méthane mesurée par le capteur, pour différents angles d'inclinaison de l'axe d'émission de la source de lumière par rapport à une direction normale au grand axe d'une ellipse, dite première ellipse et pour différents angles d'inclinaison de l'axe du photodétecteur de mesure par rapport audit grand axe.

La figure 4D représente l'évolution de la quantité de signal détectée par le photodétecteur de mesure pour différents angles d'inclinaison de l'axe d'émission de la source de lumière par rapport à une direction normale au grand axe d'une ellipse, dite première ellipse et pour différents angles d'inclinaison de l'axe du photodétecteur de mesure par rapport audit grand axe.

## EXPOSE DE MODES DE REALISATION PARTICULIERS

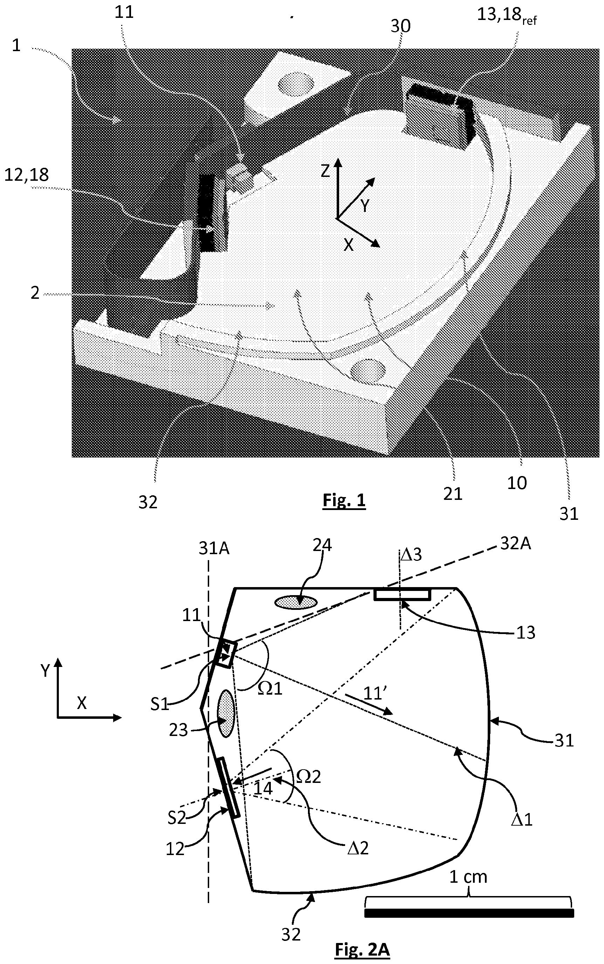

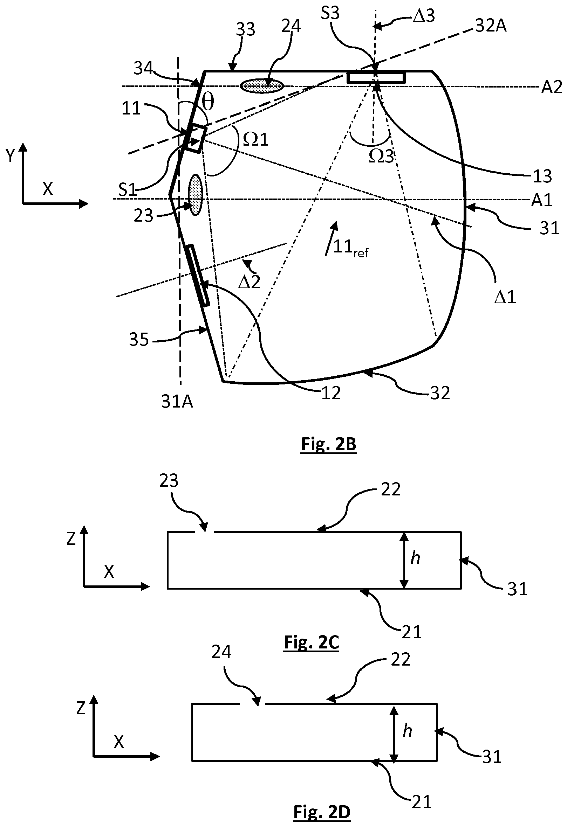

La figure 1 représente un exemple de capteur de gaz selon l'invention. Le capteur comporte une enceinte 10, apte à recevoir un gaz à analyser. L'enceinte est délimitée par deux parois 21, 22, dites parois transversales, s'étendant selon un plan transversal XY. Sur la figure 1, on a représenté une première paroi transversale 21, la paroi transversale 22 étant représentée en transparence de façon à visualiser l'intérieur de l'enceinte 10. Les parois transversales 21 et 22 sont représentées sur les figures 2C et 2D.

Les parois transversales peuvent être parallèles au plan transversal XY, ou sensiblement parallèles à ce dernier, le terme sensiblement indiquant qu'une tolérance angulaire, par exemple +/- 20° ou +/- 30° est admise. Elles peuvent être planes ou incurvées.

L'enceinte comporte également une paroi 30, dite paroi périphérique, délimitant l'enceinte, et s'étendant entre la première paroi transversale 21 et la deuxième paroi transversale 22. La paroi périphérique 30 s'étend autour d'un axe longitudinal Z, perpendiculaire au plan transversal XY. La paroi périphérique 30 prend la forme d'une paroi cylindrique, dont la section, dans le plan transversal XY, comporte des portions courbes 31, 32 et des portions planes, comme décrit en lien avec les figures 2A et 2B. Les portions courbes peuvent notamment être elliptiques ou paraboliques. Une portion elliptique suit, selon le plan transversal XY, le contour d'une partie d'une ellipse. Une portion parabolique suit, selon le plan transversal XY, le contour d'une partie d'une parabole. Selon l'invention, la portion courbe 31 est elliptique.

Le capteur de gaz 1 comporte une source de lumière 11, apte à émettre une onde lumineuse 11' selon un cône d'émission $\Omega 1$, le cône d'émission s'étendant autour d'un axe d'émission $\Delta 1$. La source de lumière 11 est disposée au sommet S1 du cône d'émission $\Omega 1$. La source de lumière 11 est apte à émettre l'onde lumineuse 11', dite onde lumineuse incidente, selon une bande spectrale d'illumination $\Delta$, cette dernière pouvant s'étendre entre le proche ultraviolet et l'infrarouge moyen, entre 200 nm et 10 $\mu$m, et le plus souvent dans l'infrarouge, notamment entre 1 $\mu$m et 10 $\mu$m. La source de lumière 11 peut notamment être impulsionnelle, l'onde lumineuse incidente 11' étant une impulsion de durée généralement comprise entre 100 ms et 1 s. Il peut notamment s'agir d'une source de lumière de type filament suspendu, parcouru par un courant électrique, et chauffé à une température comprise entre 400°C et 800°C de façon à émettre une lumière infrarouge.

La paroi périphérique 30 comporte une première portion réfléchissante 31, configurée pour recevoir une première partie du cône d'émission $\Omega 1$, de façon à le réfléchir vers un photodétecteur, dit photodétecteur de mesure 12. De cette façon, une partie de l'onde lumineuse 11' située dans le cône d'émission $\Omega 1$ est réfléchie vers le photodétecteur de mesure 12. L'onde lumineuse traverse ainsi le gaz présent dans l'enceinte 10, formant ainsi une onde transmise 14 atteignant le photodétecteur de mesure 12 et détectée par ce dernier. Dans l'exemple considéré, le photodétecteur 12 est une thermopile, apte à délivrer un signal dépendant de l'intensité de l'onde lumineuse à laquelle est exposé le photodétecteur. Il peut également d'agir d'une photodiode ou d'un autre type de photodétecteur. Le photodétecteur de mesure 12 peut être couplé à un filtre 18 passe-bande, dont la bande spectrale correspond à une bande spectrale d'une espèce gazeuse $G_s$ dont on souhaite déterminer une quantité $C_s$ dans le mélange gazeux. L'intensité $I$ de l'onde lumineuse 14 détectée par le photodétecteur de mesure 12 dépend de la quantité $C_s$ selon la relation de Beer-Lambert :

$$att = \frac{I}{I_0} = e^{-\mu(C_s)l} \text{ (1)}$$

où :

- $\mu(C_s)$ est un coefficient atténuation, dépendant de la quantité $C_s$ recherchée;
- $l$ est l'épaisseur de gaz traversé par l'onde lumineuse dans l'enceinte ;
- $I_0$ est l'intensité de l'onde lumineuse incidente, qui correspond à l'intensité de l'onde atteignant le photodétecteur de mesure 12 en l'absence de gaz absorbant dans l'enceinte.

La comparaison entre $I$ et $I_0$, prenant la forme d'un ratio $\frac{I}{I_0}$, correspond à une atténuation *att* générée par l'espèce gazeuse considérée.

Lors de chaque impulsion de la source de lumière 11, on peut ainsi déterminer $\mu(C_s)$, ce qui permet d'estimer $\hat{C}_s$ sachant que la relation entre $C_s$ et $\mu(C_s)$ est connue.

Par paroi réfléchissante, on entend une paroi dont le coefficient de réflexion, dans tout ou partie de bande spectrale $\Delta$ de l'onde lumineuse émise par la source 11, est supérieur à 50%, et de préférence supérieur à 80%. Une paroi réfléchissante peut être formée à l'aide d'un matériau réfléchissant tel un métal, par exemple de l'or.

L'expression (1) suppose une maîtrise de l'intensité $I_0$ de l'onde lumineuse émise par la source de lumière 11. A cet effet, le dispositif comporte un photodétecteur de référence 13, agencé de telle sorte qu'il détecte une onde lumineuse, dite onde lumineuse de référence $11_{ref}$, atteignant le photodétecteur de référence 13 sans interagir avec le gaz présent dans l'enceinte 10, ou sans interagir significativement avec ce dernier. La paroi périphérique 30 comporte à cet effet une deuxième portion réfléchissante 32, configurée pour recevoir une deuxième partie du cône d'émission $\Omega1$ émis par la source de lumière 11, de façon à le réfléchir vers le photodétecteur de référence 13. L'intensité de l'onde lumineuse de référence $11_{ref}$, détectée par le photodétecteur de référence 13, est désignée par le terme intensité de référence $I_{ref}$. Dans cet exemple, le photodétecteur de référence 13 est associé à un filtre optique, dit filtre optique de référence $18_{ref}$. Le filtre optique de référence $18_{ref}$ définit une bande passante correspondant à une plage de longueurs d'onde non absorbées par l'échantillon. La bande passante de référence est par exemple centrée autour de la longueur d'onde 3.91 $\mu$m. La mesure de $I_{ref}$ permet l'estimation de $I_0$, ce qui permet de déterminer $\mu(C_s)$, puis d'estimer $\hat{C}_s$. La mesure de $I_{ref}$ permet notamment de tenir compte des variations temporelles de l'intensité $I_0$ de l'onde lumineuse émise par la source de lumière 11.

Dans l'exemple représenté sur la figure 1, la source de lumière 11, le photodétecteur de mesure 12 et le photodétecteur de référence 13 s'étendent, au moins en partie à l'intérieur de l'enceinte 10. Selon des variantes, la source de lumière 11, et/ou le photodétecteur de mesure 12 et/ou le photodétecteur de référence 13 sont disposés à l'extérieur de l'enceinte 10. Des fenêtres transparentes ou des ouvertures sont alors prévues dans l'enceinte 10, de façon à permettre une transmission de la lumière de part et d'autre de la paroi périphérique 30.

La figure 2A représente une coupe transversale du capteur de gaz représenté sur la figure 1. La première portion 31 de la paroi périphérique 30 reçoit une partie du cône d'émission $\Omega1$ émis par la source de lumière et le réfléchit vers le photodétecteur de mesure 12, selon un cône de réflexion $\Omega2$, dit cône de mesure. Dans le plan transversal XY, la première portion 31 suit le contour d'une portion d'ellipse, dite première ellipse, définissant un grand axe s'étendant selon une direction 31A. La source de lumière 11 est disposée à un premier foyer de la première ellipse, tandis que le photodétecteur de mesure 12 est disposé à un deuxième foyer de la première ellipse. La figure 2A comporte un gabarit définissant une échelle.

Comme précédemment indiqué, la paroi périphérique 30 comporte une deuxième portion réfléchissante 32, configurée pour recevoir une deuxième partie du cône d'émission $\Omega1$, de façon à le réfléchir vers le photodétecteur de référence 13, selon un cône de réflexion $\Omega3$, dit cône de référence. Le cône de référence $\Omega3$ est représenté sur la figure 2B. Dans le plan transversal XY, la deuxième portion 32 suit le contour d'une portion d'ellipse, dite deuxième ellipse, définissant un grand axe s'étendant selon une direction 32A. La source de lumière 11 est disposée à un premier foyer de la deuxième ellipse, tandis que le photodétecteur de référence 13 est disposé à un deuxième foyer de la deuxième ellipse.

De préférence, quel que soit le mode de réalisation, les portions courbes 31 et 32 sont agencées pour conjuguer la source de lumière 11 respectivement au photodétecteur de mesure 12 et au photodétecteur de référence 13. Ainsi, le cône de mesure $\Omega2$ et le cône de référence $\Omega3$ convergent respectivement sur le photodétecteur de mesure 12 et sur photodétecteur de référence 13. Selon un tel arrangement, le photodétecteur de mesure 12 est disposé au sommet S2 du cône de mesure $\Omega2$, le photodétecteur de réflexion 13 étant disposé au sommet S3 du cône de référence $\Omega3$. Un tel arrangement permet d'optimiser la quantité de lumière détectée par chaque photodétecteur, et par conséquent d'améliorer la sensibilité du capteur. Il est précisé que la portion 32 peut également être paraboliques, ou former de facettes planes, l'ensemble des facettes décrivant, selon le plan longitudinal XY, une partie d'une courbe, par exemple une parabole ou une ellipse.

De préférence, la source de lumière 11 est disposée de telle sorte que la distance, dans le plan transversal XY, la séparant de chaque point de la première portion 31, est supérieure ou égale à la distance séparant les foyers de la première ellipse, cette distance étant usuellement notée *2c, c* désignant la distance entre un foyer de l'ellipse et son centre. De même, la source de lumière est disposée de telle sorte que la distance, dans le plan transversal XY, la séparant de chaque point de la deuxième portion 32 est supérieure ou égale à la distance séparant les foyers de la deuxième ellipse. Cette condition permet d'améliorer la quantité de lumière détectée par chaque photodétecteur.

De préférence, les directions du grand axe de la première ellipse et du grand axe de la deuxième ellipse sont sécantes et forment un angle $\theta$ inférieur ou égal à 90°, cet angle $\theta$ étant représenté sur la figure 2B. Dans cet exemple, $\theta$ = 70°.

Dans l'exemple représenté, la première ellipse et la deuxième ellipse présentent les caractéristiques géométriques indiquées ci-après.

Première ellipse (première portion elliptique 31):

- longueur du grand axe : 12.3 mm ;
- longueur du petit axe : 11.9 mm ;
- distance entre le foyer de l'ellipse et le centre du grand axe : 3 mm.

Deuxième ellipse (première portion elliptique 32) :

- longueur du grand axe : 12.75 mm ;
- longueur du petit axe : 11.9 mm ;
- distance entre le foyer de l'ellipse et le centre du grand axe : 4.6 mm.

Dans cet exemple, la paroi périphérique 30 s'étend, selon l'axe longitudinal Z, selon une hauteur $h$ égale à 1.2 mm.

Outre les portions elliptiques 31 et 32, la paroi périphérique 30 comporte :

- une troisième portion 33 plane, contre laquelle est disposée le photodétecteur de référence 13, l'axe optique $\Delta3$ du photodétecteur de référence 13 étant de préférence orthogonal à la troisième portion 33;
- une quatrième portion 34 plane, contre laquelle est disposée la source de lumière 11, l'axe central $\Delta1$ du cône d'émission $\Omega1$ étant de préférence orthogonal à la quatrième portion 34 ;
- une cinquième portion 35 plane, contre laquelle est disposée le photodétecteur de mesure 12, l'axe optique $\Delta2$ du photodétecteur de mesure 12 étant de préférence orthogonal à la cinquième portion 35.

La troisième portion 33 et/ou la quatrième portion 34 et/ou la cinquième portion 35 sont de préférence réfléchissantes. Comme préalablement indiqué, ces portions peuvent comporter une ouverture ou une fenêtre transparente lorsqu'un élément tel un photodétecteur, ou la source de lumière 11, est disposé à l'extérieur de l'enceinte 10.

L'enceinte 10 comporte une ouverture d'admission 23, permettant l'admission du gaz dans l'enceinte ainsi qu'une ouverture d'évacuation 24, permettant l'évacuation du gaz de l'enceinte. Le positionnement des ouvertures. Ces ouvertures sont ménagées sur une des parois transversales 21 ou 22, comme représenté sur les figures 2C et 2D, ou sur chaque paroi transversale.

La position des ouvertures sur les parois transversales n'est pas indifférente et on a estimé qu'il était préférable de disposer ces ouvertures de telle sorte que les projections respectives, selon l'axe longitudinal Z, du cône d'émission $\Omega1$ et du cône de mesure $\Omega2$, soient situées à l'extérieur de chaque ouverture. Ainsi, chaque ouverture d'admission 23 ou d'évacuation 24 est ménagée, dans une paroi transversale, de façon à s'étendre à l'extérieur des projections, sur ladite paroi, du cône d'émission $\Omega1$ et du cône de mesure $\Omega2$. Un tel positionnement permet de limiter l'impact de l'ouverture sur la détection effectuée par le photodétecteur de mesure 12. De préférence, chaque ouverture d'admission ou d'évacuation est également disposée de façon à s'étendre également à l'extérieur de la projection, selon l'axe longitudinal Z, du cône de référence $\Omega3$. Cela permet de limiter l'impact de l'ouverture sur la détection effectuée par le photodétecteur de référence 13.

Sur les figures 2A et 2B, on a représenté, en grisé, des parties de l'enceinte 10 à l'aplomb desquelles peuvent être ménagées des ouvertures d'admission ou d'évacuation 23, 24, dans les parois transversales 21 ou 22. La figure 2C représente une vue en coupe de l'enceinte 10, les parois transversales étant espacées l'une de l'autre d'une hauteur $h$ comprise par exemple entre 100 $\mu$m et 1 cm et de préférence 500 $\mu$m et 1 cm. Cette coupe est réalisée selon la direction $\Delta1$ représenté sur la figure 2B, et permet de voir l'emplacement de l'ouverture 23 pratiquée dans la deuxième paroi transversale 22. La figure 2D représente une autre vue en coupe de l'enceinte 10, réalisée selon la direction A2 représenté sur la figure 2B, et permettant d'observer l'ouverture 24 pratiquée dans la deuxième paroi transversale 22.

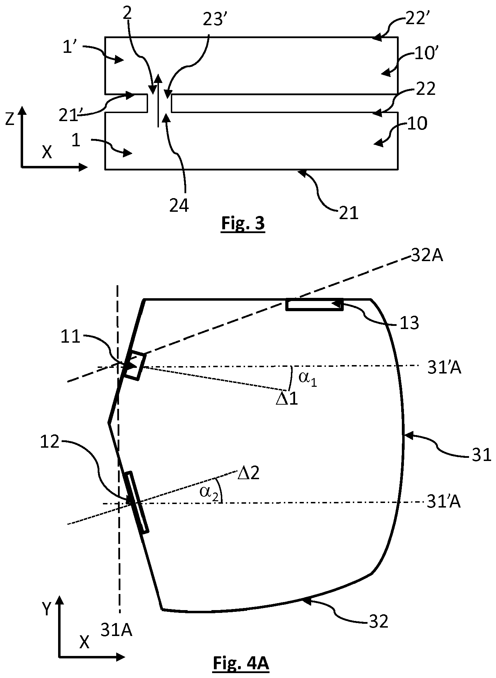

La disposition des ouvertures d'admission ou d'évacuation dans les parois transversales permet de raccorder plus aisément le capteur 1 à un circuit fluidique d'admission ou d'évacuation de gaz. Lorsqu'une ouverture 23 est pratiquée dans la première paroi transversale 21 et qu'une autre ouverture 24 est pratiquée dans la deuxième paroi transversale 22, il est possible de superposer deux enceintes l'une sur l'autre, de façon à former un dispositif de détection comportant au moins deux capteurs 1,1' tels que précédemment décrits. Un tel dispositif est représenté sur la figure 3. Le dispositif de détection est agencé de façon que deux enceintes 10, 10' de chaque capteur soient superposées l'une à l'autre, une deuxième paroi transversale 22 d'une première enceinte 10 étant assemblée à une première paroi transversale 21' d'une deuxième enceinte 10', cette dernière s'étendant entre deux parois transversales 21', 22'. Ainsi, le gaz à analyser 2 peut circuler d'un capteur à un autre à travers les ouvertures pratiquées dans chaque paroi transversale. Sur cette figure, le déplacement du gaz est illustré par une flèche. Une telle configuration permet de disposer de plusieurs capteurs superposés l'un à l'autre, chaque capteur étant dédié à la détection d'une espèce gazeuse prédéterminée.

Par ailleurs, indépendamment de la position des ouvertures d'admission et d'évacuation décrite dans les précédents paragraphes, on a constaté que la position de la source de lumière 11, et plus précisément l'inclinaison de l'axe central $\Delta1$ du cône d'émission $\Omega1$, a une influence sur la quantité de lumière détectée par le photodétecteur de mesure 12. C'est également le cas de l'inclinaison de l'axe optique $\Delta2$ du photodétecteur de mesure. Cet effet est illustré sur les figures 4A à 4D. La figure 4A représente un angle d'inclinaison $\alpha_1$, dit premier angle d'inclinaison, s'étendant entre :

- une direction 31'A, orthogonale à la direction 31A du grand axe de la première ellipse, définie par la première portion 31,
- et l'axe central $\Delta1$ du cône d'émission $\Omega1$.

On a montré, sur la base de simulations, que l'angle d'inclinaison $\alpha_1$ ainsi défini a une influence sur la quantité de lumière collectée par le photodétecteur de mesure 12, selon l'arrangement décrit ci-avant. De préférence, cet angle est compris entre 5° et 20°, et encore de préférence entre 12° et 18°, soit autour de 15°.

La figure 4A montre également un deuxième angle d'inclinaison $\alpha_2$ entre la direction 31'A préalablement définie et l'axe $\Delta 2$ du photodétecteur de mesure 12. De même que le premier angle d'inclinaison $\alpha_1$, le deuxième angle d'inclinaison $\alpha_2$ est de préférence compris entre 5° et 20°, et encore de préférence entre 10° et 18°, soit autour de 15°.

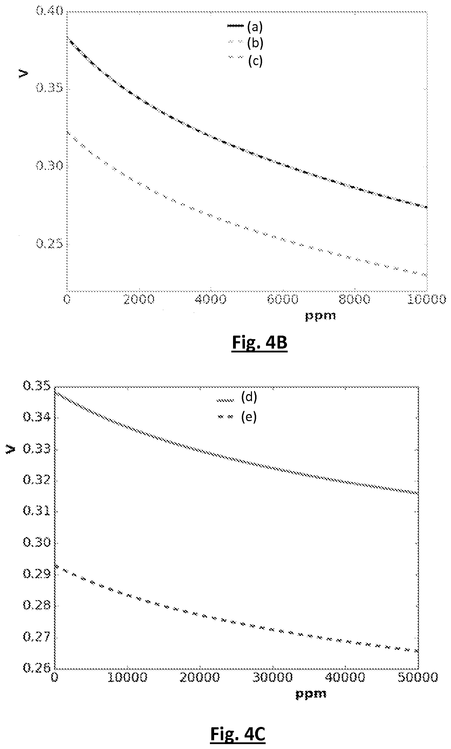

Des simulations ont été réalisées, de façon à comparer la quantité de lumière reçue par le photodétecteur de mesure 12 en fonction pour trois valeurs du premier l'angle d'inclinaison $\alpha_1$, respectivement égales à 10°, 15° et 25°, ainsi que pour deux valeurs du deuxième angle d'inclinaison $\alpha_2$, respectivement égales à 15° et 25°. La figure 4B représente une évolution de la quantité de lumière détectée par le photodétecteur de mesure 12 en fonction de la concentration en ppm de dioxyde de carbone dans l'enceinte 10. La quantité de lumière détectée par le photodétecteur est exprimée en Volts, le photodétecteur modélisé étant une thermopile. Les trois configurations testées sont les suivantes :

- configuration a : $\alpha_1$ = 10°, $\alpha_2$ = 15° ;
- configuration b : $\alpha_1$ = 15°, $\alpha_2$ = 15° ;
- configuration c : $\alpha_1$ = 25°, $\alpha_2$ = 25°.

Des valeurs d'angle $\alpha_1$ = 10°, $\alpha_2$ = 25° (configuration a) ou $\alpha_1$ = 15°, $\alpha_2$ = 15° (configuration b), permettent d'augmenter la quantité de lumière détectée, par rapport à des angles $\alpha_1$ = 25°, $\alpha_2$ = 25° (configuration c). Les courbes correspondant aux configurations a et b sont confondues.

La même conclusion peut être tirée de la figure 4C, représentant la quantité de lumière détectée par le photodétecteur de mesure 12 en fonction de la concentration en méthane dans l'enceinte 10, selon deux configurations :

- configuration d : $\alpha_1$ = 15°, $\alpha_2$ = 15° ;
- configuration e : $\alpha_1$ = 25°, $\alpha_2$ = 25°.

La configuration d est préférable à la configuration e.

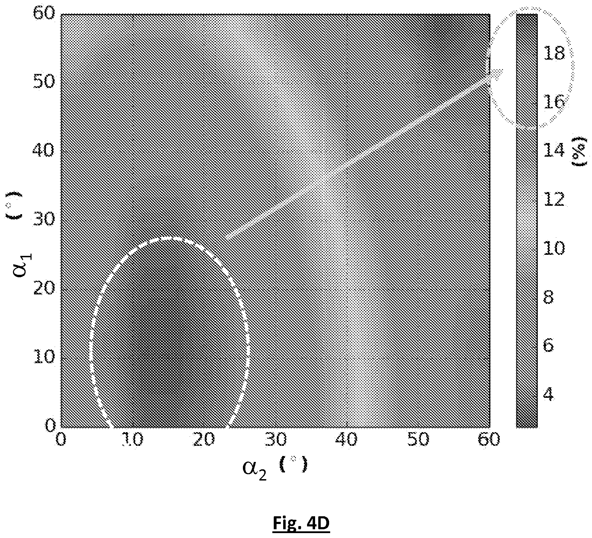

La figure 4D représente le pourcentage de lumière, émise par la source, détecté par le photodétecteur de mesure 12 selon différentes combinaisons $\alpha_1$ (abscisses) $\alpha_2$ (ordonnées). Le pourcentage est représenté en niveaux de gris.

La plage préférée est entourée par des tirets clairs.

L'invention pourra être utilisée pour des capteurs de gaz dans différents domaines, par exemple l'environnement, en particulier le contrôle de la pollution atmosphérique, l'industrie, par exemple l'industrie chimique, pétrolière ou agroalimentaire, ou la santé.

## Revendications

1. Capteur (1) de gaz comportant une enceinte (10), apte à recevoir le gaz (2), le capteur comportant également :

   ■ une source de lumière (11), apte à émettre une onde lumineuse (11') se propageant dans l'enceinte selon un cône d'émission ($\Omega 1$) ;
   ■ un photodétecteur de mesure (12) et un photodétecteur de référence (13), étant chacun apte à détecter une onde lumineuse émise par la source de lumière (11) et ayant traversé l'enceinte ;

   le capteur étant tel que l'enceinte (10) s'étend entre deux parois transversales (21, 22), disposées l'une face à l'autre, les parois transversales étant reliées l'une à l'autre par une paroi périphérique (30), s'étendant, entre les parois transversales, autour d'un axe longitudinal (Z), la paroi périphérique (30) comportant :

   ■ une première portion réfléchissante (31), apte à recevoir une première partie du cône d'émission ($\Omega 1$) pour la réfléchir vers le photodétecteur de mesure (3), formant ainsi un cône ($\Omega 2$) dit de mesure, convergeant vers le photodétecteur de mesure, la première portion réfléchissante (31) suivant, dans un plan transversal (XY), perpendiculaire à l'axe longitudinal (Z), une première ellipse, le sommet (S1) du cône d'émission ($\Omega 1$) étant disposé en un premier foyer de la première ellipse;
   ■ une deuxième portion réfléchissante (32), apte à recevoir une deuxième partie du cône d'émission ($\Omega 1$) pour la réfléchir vers le photodétecteur de référence (13), formant ainsi un cône ($\Omega 3$) dit de référence, convergeant vers le photodétecteur de référence;

   l'enceinte comportant au moins une ouverture (23), ménagée dans une desdites parois transversales (21, 22), et destinée à l'admission ou à l'évacuation du gaz (2), l'ouverture étant ménagée, dans la paroi transversale, à l'extérieur d'une projection selon l'axe longitudinal (Z), et sur ladite paroi transversale, du cône d'émission ($\Omega 1$) et du cône de mesure ($\Omega 2$).

2. Capteur selon la revendication 1, dans lequel l'ouverture est également localisée à l'extérieur d'une projection, selon l'axe longitudinal (Z), et sur ladite paroi transversale, du cône de référence ($\Omega 3$).

3. Capteur selon la revendication 1 ou la revendication 2, dans lequel l'enceinte (10) comporte deux ouvertures (23, 24), chaque ouverture étant ménagée dans une desdites parois transversales (21, 22) et étant destinée à l'admission ou à l'évacuation du gaz (2), chaque ouverture étant localisée, sur ladite paroi transversale, à l'extérieur de projections, selon l'axe longitudinal (Z), du cône d'émission ($\Omega1$) ainsi que du cône de mesure ($\Omega2$).

4. Capteur selon l'une quelconque des revendications 1 à 3, dans lequel les parois transversales (21, 22) s'étendent selon un plan transversal (XY), perpendiculaire à l'axe longitudinal (Z).

5. Capteur selon l'une quelconque des revendications précédentes, dans lequel le sommet (S2) du cône de mesure ($\Omega2$) est disposé en un deuxième foyer de ladite première ellipse.

6. Capteur selon l'une quelconque des revendications précédentes, dans lequel la deuxième portion réfléchissante (32) suit, dans le plan transversal (XY), une deuxième ellipse, le capteur étant tel que le sommet (S1) du cône d'émission ($\Omega1$) est disposé en un premier foyer de la deuxième ellipse, et que le sommet (S3) du cône de référence ($\Omega3$) est disposé en un deuxième foyer de la deuxième ellipse.

7. Capteur selon l'une quelconque des revendications précédentes, dans lequel la première ellipse comporte un grand axe s'étendant selon une direction (31A), le cône d'émission ($\Omega1$) s'étendant autour d'un axe central d'émission ($\Delta1$), l'axe central d'émission étant incliné par rapport à une direction orthogonale (31'A) à la direction du grand axe, l'angle d'inclinaison ($\alpha_1$) étant compris entre 5° et 20°.

8. Capteur selon l'une quelconque des revendications précédentes, dans lequel la première ellipse comporte un grand axe (31A), le photodétecteur de mesure définissant un axe optique ($\Delta2$), l'axe optique étant incliné par rapport à une direction orthogonale (31'A) à la direction du grand axe, l'angle d'inclinaison ($\alpha_2$) étant compris entre 5° et 20°.

9. Dispositif de détection d'un gaz, comportant un premier capteur (1) selon l'une quelconque des revendications précédentes et un deuxième capteur (1') selon l'une quelconque des revendications précédentes (1'), le premier capteur et le deuxième capteur étant superposés l'un à l'autre, de telle sorte qu'une paroi transversale (22) du premier capteur, comportant une ouverture (24), soit disposée face à une paroi transversale (21') du deuxième capteur, comportant une ouverture (23'), de façon à permettre une circulation de gaz (2) à travers les ouvertures ménagées dans lesdites parois transversales.

**Patentansprüche**

1. Gassensor (1), welcher ein Gehäuse (10) aufweist, das geeignet ist, das Gas (2) aufzunehmen, wobei der Sensor außerdem aufweist:

   • eine Lichtquelle (11), die geeignet ist, eine Lichtwelle (11') auszusenden, die sich in dem Gehäuse gemäß einem Emissionskegel ($\Omega1$) ausbreitet;
   • einen Mess-Photodetektor (12) und einen Referenz-Photodetektor (13), die jeweils geeignet sind, eine Lichtwelle zu detektieren, die von der Lichtquelle (11) ausgesendet wurde und das Gehäuse durchquert hat;

   wobei der Sensor so beschaffen ist, dass sich das Gehäuse (10) zwischen zwei Querwänden (21, 22) erstreckt, die einander gegenüberliegend angeordnet sind, wobei die Querwände durch eine Umfangswand (30) miteinander verbunden sind, die sich zwischen den Querwänden um eine Längsachse (Z) erstreckt, wobei die Umfangswand (30) aufweist:

   • einen ersten reflektierenden Abschnitt (31), der geeignet ist, einen ersten Teil des Emissionskegels ($\Omega1$) zu empfangen, um ihn zu dem Mess-Photodetektor (3) hin zu reflektieren und dabei einen sogenannten Messkegel ($\Omega2$) zu bilden, der zu dem Mess-Photodetektor hin zusammenläuft, wobei der erste reflektierende Abschnitt (31) in einer zur Längsachse (Z) senkrechten Querebene (XY) einer ersten Ellipse folgt, wobei die Spitze (S1) des Emissionskegels ($\Omega1$) in einem ersten Brennpunkt der ersten Ellipse angeordnet ist;
   • einen zweiten reflektierenden Abschnitt (32), der geeignet ist, einen zweiten Teil des Emissionskegels ($\Omega1$) zu empfangen, um ihn zu dem Referenz-Photodetektor (13) hin zu reflektieren und dabei einen sogenannten Referenzkegel ($\Omega3$) zu bilden, der zu dem Referenz-Photodetektor hin zusammenläuft;

   wobei das Gehäuse mindestens eine Öffnung (23) aufweist, die in einer der Querwände (21, 22) ausgebildet ist und zum Einlassen oder zum Auslassen des Gases (2) bestimmt ist, wobei die Öffnung in der Querwand außerhalb einer Projektion des Emissionskegels ($\Omega1$) und des Messkegels ($\Omega2$) entlang der Längsachse (Z) auf die Querwand ausgebildet ist.

2. Sensor nach Anspruch 1, wobei die Öffnung auch außerhalb einer Projektion des Referenzkegels ($\Omega3$) entlang der Längsachse (Z) auf die Querwand angeordnet ist.

**3.** Sensor nach Anspruch 1 oder Anspruch 2, wobei das Gehäuse (10) zwei Öffnungen (23, 24) aufweist, wobei jede Öffnung in einer der Querwände (21, 22) ausgebildet ist und zum Einlassen oder zum Auslassen des Gases (2) bestimmt ist, wobei jede Öffnung an der Querwand außerhalb der Projektionen des Emissionskegels (Ω1) sowie des Messkegels (Ω2) entlang der Längsachse (Z) angeordnet ist.

**4.** Sensor nach einem der Ansprüche 1 bis 3, wobei sich die Querwände (21, 22) entlang einer Querebene (XY) erstrecken, die zur Längsachse (Z) senkrecht ist.

**5.** Sensor nach einem der vorhergehenden Ansprüche, wobei die Spitze (S2) des Messkegels (Ω2) in einem zweiten Brennpunkt der ersten Ellipse angeordnet ist.

**6.** Sensor nach einem der vorhergehenden Ansprüche, wobei der zweite reflektierende Abschnitt (32) in der Querebene (XY) einer zweiten Ellipse folgt, wobei der Sensor so beschaffen ist, dass die Spitze (S1) des Emissionskegels (Ω1) in einem ersten Brennpunkt der zweiten Ellipse angeordnet ist und die Spitze (S3) des Referenzkegels (Ω3) in einem zweiten Brennpunkt der zweiten Ellipse angeordnet ist.

**7.** Sensor nach einem der vorhergehenden Ansprüche, wobei die erste Ellipse eine große Achse aufweist, die sich in einer Richtung (31A) erstreckt, wobei sich der Emissionskegel (Ω1) um eine Emissionsmittelachse (Δ1) erstreckt, wobei die Emissionsmittelachse bezüglich einer zur Richtung der großen Achse orthogonalen Richtung (31'A) geneigt ist, wobei der Neigungswinkel (α1) zwischen 5° und 20° liegt.

**8.** Sensor nach einem der vorhergehenden Ansprüche, wobei die erste Ellipse eine große Achse (31A) aufweist, wobei der Mess-Photodetektor eine optische Achse (Δ2) definiert, wobei die optische Achse bezüglich einer zur Richtung der großen Achse orthogonalen Richtung (31'A) geneigt ist, wobei der Neigungswinkel (α2) zwischen 5° und 20° liegt.

**9.** Vorrichtung zur Detektion eines Gases, welche einen ersten Sensor (1) nach einem der vorhergehenden Ansprüche und einen zweiten Sensor (1') nach einem der vorhergehenden Ansprüche aufweist, wobei der erste Sensor und der zweite Sensor übereinander angeordnet sind, derart, dass eine Querwand (22) des ersten Sensors, die eine Öffnung (24) aufweist, einer Querwand (21') des zweiten Sensors, die eine Öffnung (23') aufweist, zugewandt angeordnet ist, um so ein Strömen von Gas (2) durch die in den Querwänden ausgebildeten Öffnungen hindurch zu ermöglichen.

**Claims**

**1.** A gas sensor (1) comprising a chamber (10), able to receive the gas (2), the sensor also comprising:

- a light source (11), able to emit a light wave (11') that propagates through the chamber in an emission cone (Ω1);
- a measurement photodetector (12) and a reference photodetector (13), each being able to detect a light wave emitted by the light source (11) and having passed through the chamber;

the sensor being such that the chamber (10) lies between two transverse walls (21, 22), which are placed facing each other, the transverse walls being connected to each other by a peripheral wall (30) that extends, between the transverse walls, about a longitudinal axis (Z), the peripheral wall (30) comprising:

- a first reflective segment (31), able to receive a first portion of the emission cone (Ω1) in order to reflect it toward the measurement photodetector (3), thus forming a cone (Ω2) called the measurement cone, which converges toward the measurement photodetector, the first reflective segment (31) following, in a transverse plane (XY), perpendicular to the longitudinal axis (Z), a first ellipse, the apex (S1) of the emission cone (Ω1) being placed at a first focus of the first ellipse;
- a second reflective segment (32), able to receive a second portion of the emission cone (Ω1) in order to reflect it toward the reference photodetector (13), thus forming a cone (Ω3) called the reference cone, which converges toward the reference photodetector;

the chamber comprising at least one aperture (23), produced in one of said transverse walls (21, 22), and intended for the admission or evacuation of the gas (2), the aperture being produced, in the transverse wall, outside a projection, along the longitudinal axis (Z), and onto said transverse wall, of the emission cone (Ω1) and of the measurement cone (Ω2).

**2.** The sensor as claimed in claim 1, wherein the aperture is also located outside a projection, along the longitudinal axis (Z), and onto said transverse wall, of the reference cone (Ω3).

**3.** The sensor as claimed in claim 1 or claim 2, wherein the chamber (10) comprises two apertures (23, 24), each aperture being produced in one of said transverse walls (21, 22) and being intended for the admission or the evacuation of the gas (2), each aperture being located, on said transverse wall, outside projections, along the longitudinal axis (Z), of the emission cone ($\Omega1$) and of the measurement cone ($\Omega2$).

4. The sensor as claimed in any one of claims 1 to 3, wherein the transverse walls (21, 22) lie in a transverse plane (XY), perpendicular to the longitudinal axis (Z).

5. The sensor as claimed in any one of the preceding claims, wherein the apex (S2) of the measurement cone ($\Omega2$) is placed at a second focus of said first ellipse.

6. The sensor as claimed in any one of the preceding claims, wherein the second reflective segment (32) follows, in the transverse plane (XY), a second ellipse, the sensor being such that the apex (S1) of the emission cone ($\Omega1$) is placed at a first focus of the second ellipse, and such that the apex (S3) of the reference cone ($\Omega3$) is placed at a second focus of the second ellipse.

7. The sensor as claimed in any one of the preceding claims, wherein the first ellipse has a major axis extending in a direction (31A), the emission cone ($\Omega1$) extending about a central emission axis ($\Delta1$), the central emission axis being inclined with respect to a direction (31'A) orthogonal to the direction of the major axis, the angle of inclination ($\alpha_1$) being comprised between 5° and 20°.

8. The sensor as claimed in any one of the preceding claims, wherein the first ellipse has a major axis (31A), the measurement photodetector defining an optical axis ($\Delta2$), the optical axis being inclined with respect to a direction (31'A) orthogonal to the direction of the major axis, the angle of inclination ($\alpha2$) being comprised between 5° and 20°.

9. A device for detecting a gas, comprising a first sensor (1) as claimed in any one of the preceding claims and a second sensor (1') as claimed in any one of the preceding claims, the first sensor and the second sensor being superposed on each other, such that a transverse wall (22) of the first sensor, comprising an aperture (24), is placed facing a transverse wall (21') of the second sensor, comprising an aperture (23'), so as to allow a flow of gas (2) through the apertures produced in said transverse walls.

**Fig. 1**

**Fig. 2A**

**Fig. 2B**

**Fig. 2C**

**Fig. 2D**

**Fig. 3**

**Fig. 4A**

**Fig. 4B**

**Fig. 4C**

**Fig. 4D**

**EP 3 593 119 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5026992 A
- WO 2007064370 A
- US 6469303 B
- EP 2133684 A
- EP 2711687 A
- EP 2891876 A
- WO 2006135212 A
- WO 2012126471 A